# EUROPÄISCHE PATENTSCHRIFT

(11) **EP 3 626 079 B1**
(45) Veröffentlichungstag und Bekanntmachung des Hinweises auf die Patenterteilung: **04.05.2022**
(21) Anmeldenummer: 19194615.1
(22) Anmeldetag: 30.08.2019
(51) Int. Cl.: A22B 7/00, B60P 3/05

(54) **FAHRZEUGANHÄNGER ZUM STRESSFREIEN UND HYGIENISCHEN SCHLACHTEN UND TRANSPORTIEREN EINES TIERKÖRPERS**
VEHICLE TRAILER FOR THE STRESS-FREE AND HYGIENIC SLAUGHTERING AND TRANSPORT OF AN AN ANIMAL BODY
REMORQUE DE VÉHICULE DESTINÉE À L'ABATTAGE SANS STRESS ET HYGIÉNIQUE ET AU TRANSPORT DES CARCASSES

(30) Priorität: 21.09.2018 AT 5015918 U
(43) Veröffentlichungstag der Anmeldung: 25.03.2020
(73) Patentinhaber: Theissl, Richard, 8541 Schwanberg (AT)
(72) Erfinder: Theissl, Richard, 8541 Schwanberg (AT)
(74) Vertreter: Wirnsberger & Lerchbaum Patentanwälte OG

(56) Entgegenhaltungen:
- WO-A1-94/14326
- DE-U1-202008 009 629
- DE-U1-202016 006 544

## Beschreibung

Die Erfindung betrifft einen Fahrzeuganhänger zum hygienischen Schlachten und Transportieren eines Tierkörpers, insbesondere eines Rindes, aufweisend einen Laderaum zum Transport des Tierkörpers, einen Deckel zum Verschließen des Laderaumes und eine Zugvorrichtung zum hängenden Positionieren des Tierkörpers.

Um Rinder zu schlachten, werden diese üblicherweise von einem Rinderproduktionsbetrieb, häufig einem Bauernhof, zu einem Schlachthof transportiert und am Schlachthof geschlachtet, um aus Rinderkörpern der Rinder Frischfleisch zu gewinnen. Schlachten meint dabei nach üblichem Sprachgebrauch ein Töten durch Blutentzug. Hierzu werden die Rinder in der Regel betäubt und anschließend in eine hängende Position gebracht, in welcher die Rinderkörper durch Öffnen von Blutgefäßen entblutet werden.

Durch einen Transport eines Rindes zum Schlachthof sowie ein anschließendes Betäuben des Rindes in einer dem Rind unbekannten Umgebung ist das Rind meist hohem Stress ausgesetzt, was häufig zu einer Verminderung einer Qualität eines Fleisches des Rindes nach dem Schlachten führt. Um diese Problematik zu vermeiden, hat es sich als vorteilhaft herausgestellt, wenn das Rind in einer dem Rind bekannten Umgebung, beispielsweise auf einem Bauernhof, geschlachtet und das Rind bzw. ein Rindkörper erst nach einem Entbluten des Rindkörpers zum Schlachthof zur Weiterverarbeitung des Rindkörpers transportiert wird. Eine solche Vorgangsweise eines Schlachtens an einem Ort mit anschließendem Transport des geschlachteten Rindkörpers an einen anderen entfernten Ort erfordert eine Einhaltung von hygienischen Bedingungen sowohl während des Schlachtens als auch während des Transportes.

Bekannt ist eine Verwendung von sogenannten mobilen Schlachtboxen zum Transport des Rindkörpers nach dessen Entbluten. Üblicherweise wird hierbei ein Rind betäubt, der Rindkörper anschließend beispielsweise mit einem Frontlader eines Traktors in eine hängende Position gebracht, um den Rindkörper zu entbluten, wonach der Rindkörper schließlich in die Schlachtbox gelegt wird, um eine hygienische Aufbewahrung bzw. einen hygienischen Transport des Rindkörpers zu einem Schlachthof sicherzustellen. Weiterhin sind die Vorrichtungen aus WO94/14326A1, DE202016006544U1 und DE202008009629U1 bekannt.

Hier setzt die Erfindung an. Aufgabe der Erfindung ist es, einen Fahrzeuganhänger der eingangs genannten Art anzugeben, welcher ein hygienisches Schlachten und einen hygienischen Transport praktikabel ermöglicht.

Die Aufgabe wird erfindungsgemäß dadurch gelöst, dass bei einem Fahrzeuganhänger der eingangs genannten Art, wobei der Deckel von der Öffnungsposition durch Kippen des Deckels in die Schließposition absenkbar ist, in welcher der Deckel den Laderaum des Fahrzeuganhängers zumindest bereichsweise oder vollständig verschließt, die Zugvorrichtung mit dem Deckel in Verbindung steht und so angeordnet ist, dass der Tierkörper bei geöffnetem Deckel mit der Zugvorrichtung am Deckel derart hochziehbar ist, dass der Tierkörper über dem Laderaum des Fahrzeuganhängers hängend positionierbar ist, um den Tierkörper in den Laderaum zu entbluten, wobei der Deckel von der Öffnungsposition, in welcher der Tierkörper mit der Zugvorrichtung am Deckel hochziehbar ist, sodass der Tierkörper in den Laderaum entblutet und anschließend in den Laderaum herabgelassen werden kann, hydraulisch oder elektrisch in die Schließposition absenkbar ist.

Grundlage der Erfindung ist die Idee, Vorgänge eines hängenden Entblutens des Tierkörpers und einer Aufbewahrung bzw. eines Transportes des Tierkörpers zu vereinfachen und hygienischer zu gestalten, indem diese mit einer einzigen Einrichtung in Form eines Fahrzeuganhängers durchführbar sind. Vorgesehen ist, dass der Tierkörper bei geöffnetem Deckel mit der Zugvorrichtung am Deckel hochziehbar ist, wodurch auf einfache und praktikable Weise eine hängende Positionierung des Tierkörpers mit wenig konstruktivem Aufwand umgesetzt ist. Da dies zudem derart erfolgt, dass der Körper dabei über dem Laderaum des Fahrzeuganhängers hängend positioniert ist, kann der Tierkörper in den Laderaum des Fahrzeuges entblutet werden, sodass eine hygienisch bedenkliche Verunreinigung einer Umgebung mit Blut vermindert bzw. vermieden ist und zudem das Blut für eine Weiterverwendung im Laderaum aufgefangen werden kann. Dies ist insbesondere bei großen Tierkörpern, beispielsweise massigen Rinderkörpern, von besonderer Bedeutung, welche eine große Menge an Blut aufweisen, welches entsprechend aufwändig zu handhaben bzw. zu transportieren ist. Weiter vorteilhaft ist mit der hängenden Positionierung des Tierkörpers über dem Laderaum eine große Beabstandung des Tierkörpers zu einem möglicherweise verunreinigten Boden einer Umgebung geschaffen, wodurch ungewollte Verunreinigungen des Tierkörpers und/oder des aufgefangenen Blutes vermeidbar sind. Nach dem Entbluten des Tierkörpers kann der Tierkörper dann auf einfache und schnelle Weise in den Laderaum des Fahrzeuges abgesenkt bzw. abgelegt werden, und zwar praktikabel indem der Tierkörper mit der Zugvorrichtung in den Laderaum herabgelassen wird. Ein Schlachten und Abtransportieren des Tierkörpers ist damit zeitreduziert ermöglicht, sodass eine Wahrscheinlichkeit einer hygienischen Beeinträchtigung des Tierkörpers bzw. des aufgefangenen Blutes vermindert ist.

Der Laderaum kann beispielsweise mit einer vorzugsweise horizontalen Ladefläche und einer oder mehreren quer, insbesondere vertikal, zur Ladefläche ausgerichteten Wänden gebildet sein, um den Tierkörper aufzunehmen. Hierbei ist es günstig, wenn die Wände flüssigkeitsdicht mit der Ladefläche verbunden sind. Bewährt hat es sich, wenn zumindest eine Wand herunterklappbar ausgebildet ist, um ein seitliches Beladen des Laderaumes zu erleichtern. Bevorzugt ist vorgesehen, dass zumindest eine Wand derart herunterklappbar ausgebildet ist, dass diese eine Rampe zum Laderaum bildet, um ein Beladen des Laderaumes zu erleichtern. Insbesondere kann über eine derart als Rampe heruntergeklappte Wand der Tierkörper besonders einfach am Deckel bei geöffnetem Deckel hochgezogen werden. Zweckmäßig ist es, wenn eine Rückwand des Fahrzeuganhängers herunterklappbar ausgebildet ist, um ein Beladen des Laderaumes zu erleichtern. Bevorzugt ist die Rückwand dabei derart herunterklappbar ausgebildet, dass diese eine Rampe zum Laderaum bildet. Als günstig hat es sich dabei erwiesen, wenn der Laderaum bzw. die Ladefläche länglich ausgebildet ist und die Rückwand quer, insbesondere vertikal, zu einer Längserstreckung des Laderaumes bzw. der Ladefläche angeordnet ist. Dadurch ist ein stabiles Beladen des Laderaumes bzw. ein stabiles Hochziehen des Tierkörpers am Deckel bei geöffnetem Deckel über die heruntergeklappte Rückwand ermöglicht.

Erfindungsgemäß ist der Deckel von einer Offnungsposition, in welcher der Tierkörper mit der Zugvorrichtung am Deckel hochziehbar ist, sodass der Tierkörper in den Laderaum entblutet und anschließend in den Laderaum herabgelassen werden kann, in eine Schließposition absenkbar, in welcher der Deckel den Laderaum des Fahrzeuganhängers zumindest bereichsweise oder vollständig verschließt. Dadurch kann der Tierkörper nach einem Entbluten des Tierkörpers praktikabel und in kurzer Zeit in den Laderaum gebracht werden, wo dieser insbesondere durch den abgesenkten Deckel geschützt ist. Es versteht sich, dass eine Öffnungsposition zweckmäßig abgestimmt auf eine Größe eines Tierkörpers so gewählt wird, dass ein praktikables Entbluten und Ablegen bzw. Absenken des Tierkörpers in den Laderaum ermöglicht ist.

Erfindungsgemäß ist der Deckel von der Offnungsposition durch Kippen des Deckels in die Schließposition absenkbar. Auf diese Weise kann eine horizontale Position eines am Deckel mit der Zugvorrichtung hochgezogenen Tierkörpers und/oder eine Höhe des Tierkörpers über dem Laderaum geändert werden, indem ein Kippwinkel des Deckels verändert wird. Insbesondere ist außerdem ein sehr einfaches Herablassen bzw. Ablegen des Tierkörpers in den Laderaum erreichbar, wenn der Tierkörper mit einem Kippen des Deckels in den Laderaum herabgelassen bzw. abgelegt wird. Bevorzugt ist dabei vorgesehen, dass der Deckel von der Öffnungsposition durch Kippen in Richtung einer Längsrichtung des Laderaumes in die Schließposition absenkbar ist. Der Tierkörper kann dadurch auf einfache Weise in Längsrichtung des Laderaumes ausgerichtet in diesem abgelegt werden.

Bewährt hat es sich, dass der Deckel auf einer dem Laderaum zugewandten Seite des Deckels einen quer zu einer Längserstreckung des Deckels ausgerichteten Ausleger aufweist, um den Tierkörper bei geöffnetem Deckel mit der Zugvorrichtung am Ausleger hochzuziehen. Dadurch ist eine Beabstandung zwischen einer Deckelinnenfläche und einem am geöffneten Deckel hochgezogenen Tierkörper erhöht, wodurch ein Hochziehen insbesondere von großen Tierkörpern erleichtert ist. Eine Ausrichtung quer zu einer Längserstreckung des Deckels meint in diesem Sinne eine nicht parallele Ausrichtung und umfasst damit sowohl eine vertikale als auch schräge bzw. winkelige Ausrichtung zu einer Längserstreckung des Deckels.

Ein robustes und verlässliches Bewegen bzw. Absenken des Deckels wird erfindungsgemäß dadurch erreicht, dass der Deckel hydraulisch oder elektrisch von der Öffnungsposition in die Schließposition absenkbar ist. Insbesondere ein hydraulisches Absenken des Deckels, beispielsweise mit einem Hydraulikmotor oder einer Hydraulikpumpe, hat sich als besonders robust und belastbar erwiesen. Vorzugsweise ist hierzu ein Motor vorgesehen, welcher eine Hydraulikpumpe betreibt, um den Deckel hydraulisch abzusenken bzw. zu bewegen. Ein hydraulisches Absenken ist praktikabel umsetzbar, indem das hydraulische Absenken mit Hydraulikzylindern erfolgt. Zweckmäßig ist vorgesehen, dass Hydraulikzylinder an gegenüberliegenden Seiten des Fahrzeuganhängers angeordnet sind, wodurch eine stabile Öffnungsposition und ein robustes Absenken des Deckels ermöglicht ist.

Günstig ist es, wenn der Laderaum als oder mit einer Blutauffangwanne ausgebildet ist, um Blut bei einem Entbluten des Tierkörpers aufzunehmen. Damit ist das Blut eines über dem Laderaum zum Entbluten positionierten Tierkörpers mit wenig Aufwand und verminderter Verschmutzung einer Umgebung mit Blut bzw. verminderter Verschmutzung des Blutes durch eine Umgebung auffangbar. Insbesondere große Blutmengen können damit einfach unter hohen hygienischen Bedingungen aufgefangen werden.

Bevorzugt ist vorgesehen, dass der Fahrzeuganhänger einen Blutsammelbehälter aufweist und der Laderaum derart ausgebildet ist, dass mit dem Laderaum aufgenommenes Blut in den Blutsammelbehälter leitbar ist. Damit kann das mit dem Laderaum aufgenommene Blut kompakt und abgeschlossen im Blutsammelbehälter gelagert werden und später bei Bedarf aus dem Blutsammelbehälter entnommen bzw. abgelassen werden. Praktikabel ist es, wenn der Blutsammelbehälter ein Blutablassventil aufweist, mit welchem Blut aus dem Blutsammelbehälter, beispielsweise am Schlachthof, ablassbar ist. Zweckmäßig ist es, wenn der Blutsammelbehälter unterhalb des Laderaumes angeordnet ist, wodurch das Blut besonders effizient aus dem Laderaum in den Blutsammelbehälter abfließen kann bzw. geleitet wird.

Vorteilhaft ist es, wenn der Laderaum mit dem Deckel flüssigkeitsdicht verschließbar ist. Eine Verunreinigung eines im Laderaum aufbewahrten Tierkörpers bzw. Blutes und/oder eine Verschmutzung der Umgebung mit Blut aus dem Laderaum ist dadurch vermindert bzw. vermieden. Zweckmäßig kann hierzu vorgesehen sein, dass der Deckel und/oder eine Laderaumöffnung, welche mit dem Deckel verschließbar ist, zumindest ein Dichtelement, beispielsweise eine Gummidichtung, aufweist, um den Laderaum mit dem Deckel flüssigkeitsdicht zu verschließen.

Um ein sicheres Hochziehen eines schweren Tierkörpers, insbesondere Rindkörpers, zu ermöglichen, ist bevorzugt vorgesehen, dass am Deckel bei geöffnetem Deckel ein Tierkörper mit einem Gewicht bis etwa 1000 kg, bis etwa 1500 kg oder bis etwa 2000 kg hochziehbar ist. Hierzu ist es praktikabel, wenn der Deckel mit oder aus Edelstahl gebildet ist und insbesondere hydraulisch betreibbar ist.

Günstig ist es, wenn die Zugvorrichtung hydraulisch antreibbar ist. Damit kann ein verlässliches Hochziehen auch von schweren Tierkörpern, insbesondere von Tierkörpern mit einem Gewicht bis etwa 2000 kg, besonders robust erreicht werden. Die Zugvorrichtung kann hierzu beispielsweise mit einem Hydraulikmotor oder einer Hydraulikpumpe antreibbar sein.

Um eine Verschmutzung der Zugvorrichtung durch eine Umgebung zu reduzieren, hat es sich als vorteilhaft herausgestellt, wenn die Zugvorrichtung an einer dem Laderaum zugewandten Seite des Deckels angeordnet ist. Dadurch ist die Zugvorrichtung bei geschlossenem Deckel durch diesen geschützt.

Praktikabel ist es, wenn ein Zugmittel der Zugvorrichtung, mit welchem der Tierkörper bei geöffnetem Deckel mit der Zugvorrichtung am Deckel hochziehbar ist, mit einem Seil und/oder einer Kette ausgebildet ist. Das Seil kann dabei mit Naturfasern oder Kunstfasern gebildet sein. Besonders belastbar ist das Seil, wenn das Seil mit Metalldrähten bzw. Metallfilamenten gebildet ist. Bevorzugt ist vorgesehen, dass das Seil oder die Kette mit oder aus Metall gebildet sind. Dies ermöglicht ein besonders robustes und sicheres Hochziehen, insbesondere eines schweren Tierkörpers, beispielsweise eines Tierkörpers mit einem Gewicht bis etwa 2000 kg.

Mit Vorteil ist vorgesehen, dass ein Zugmittel der Zugvorrichtung, mit welchem der Tierkörper bei geöffnetem Deckel mit der Zugvorrichtung am Deckel hochziehbar ist, über zumindest ein am Deckel angeordnetes Führungselement geführt und zum Tierkörper weiterführbar ist, um den Tierkörper geführt am Deckel hochzuziehen. Dies ermöglicht ein genaues Positionieren des Tierkörpers. Das Führungselement kann hierzu beispielsweise als Umlenkrolle ausgebildet sein. Zweckmäßig ist es, wenn das Führungselement an einer dem Laderaum zugewandten Seite des Deckels angeordnet ist. Das Führungselement ist dann gegen Verschmutzungen geschützt. Für eine genaue Positionierung ist es günstig, wenn das Führungselement am Ausleger des Deckels angeordnet ist.

Bewährt hat es sich, wenn die Zugvorrichtung mit einer oder als Seilwinde gebildet ist, um den Tierkörper am Deckel bei geöffnetem Deckel mit einem Seil der Seilwinde hochzuziehen. Die Seilwinde umfasst in der Regel eine Winde, mit welcher das Seil der Seilwinde bewegbar ist. Als praktisch hat sich eine Trommelwinde bewährt, auf welcher das Seil aufwickelbar ist.

Vorteilhaft ist es, wenn eine Winde der Seilwinde, mit welcher das Seil bewegbar bzw. hochziehbar ist, im Inneren des Deckels oder zumindest teilweise im Inneren des Deckels an einer dem Laderaum zugewandten Seite des Deckels angeordnet ist. Auf diese Weise ist die Winde besonders gut gegen Verschmutzungen geschützt, sodass eine mögliche Verschmutzung des Tierkörpers unmittelbar oder mittelbar über ein von der Winde bewegtes Seil vermindert ist.

Um eine stabile Positionierung des Fahrzeuganhängers sicherzustellen, ist zweckmäßig vorgesehen, dass der Fahrzeuganhänger eine oder mehrere Stützen aufweist, um den Fahrzeuganhänger gegen einen Untergrund abzustützen. Eine solche Abstützung des Fahrzeuganhängers kann insbesondere bei einem Schlachten eines schweren Tieres bzw. Tierkörpers wie einem Rind notwendig sein, um eine Umkippgefahr des Fahrzeuganhängers zu vermeiden.

Günstig ist es, wenn die eine oder mehrere Stützen ausklappbar oder ausfahrbar, bevorzugt hydraulisch ausklappbar oder hydraulisch ausfahrbar, sind. Dadurch ist eine robuste und zeiteffizient durchführbare Abstützung des Fahrzeuganhängers an einem Untergrund ermöglicht. Ein hydraulisches Ausklappen oder hydraulische Ausfahren einer Stütze kann dabei verlässlich mit einem Hydraulikzylinder umgesetzt sein. Um eine besonders verlässliche Abstützung zu erreichen, ist es zweckmäßig, wenn der Fahrzeuganhänger mehrere Stützen, insbesondere auf unterschiedlichen, bevorzugt gegenüberliegenden, Seiten des Fahrzeuganhängers, aufweist. Bewährt hat es sich, wenn der Fahrzeuganhänger sowohl ausklappbare als auch ausfahrbare Stützen aufweist. Damit kann der Fahrzeuganhänger je nach Untergrund besonders stabil abgestützt werden. Günstig ist es, wenn zumindest eine Stütze derart ausklappbar oder ausfahrbar ist, dass diese eine schräge Abstützung des Fahrzeuganhängers gegen einen Untergrund bildet, um ein insbesondere seitliches Umkippen des Fahrzeuganhängers zu vermeiden. Ist vorgesehen, dass der Deckel von der Öffnungsposition durch Kippen in die Schließposition absenkbar ist, ist es zur stabilen Abstützung vorteilhaft, wenn entlang einer Längsachse des Fahrzeuganhängers in einem Bereich einer bzw. unter einer Kippachse des Deckels, eine Stütze angeordnet ist, welche eine schräge Abstützung des Fahrzeuganhängers gegen einen Untergrund bildet.

Mit Vorteil ist vorgesehen, dass der Fahrzeuganhänger einen Motor aufweist, mit welchem der Deckel und/oder die Zugvorrichtung antreibbar sind. Der Deckel und/oder die Zugvorrichtung können damit unabhängig von einer externen Energieversorgung angetrieben werden, wodurch eine Einsatzfähigkeit des Fahrzeuganhängers erhöht ist und ein Schlachten aufwandsarm und zeiteffizient durchführbar ist. Dies gilt besonders, wenn der Deckel und die Zugvorrichtung mit dem Motor antreibbar sind. Weiter ist es entsprechend den vorgenannten Wirkungen günstig, wenn der Fahrzeuganhänger einen Motor aufweist, mit welchem der Deckel und/oder die Zugvorrichtung und/oder die Stützen antreibbar sind. In besonderem Maße kann dies erreicht werden, wenn der Deckel, die Zugvorrichtung und die Stützen, mit dem Motor antreibbar sind. Eine Einsatzfähigkeit ist bereits erhöht, wenn die Zugvorrichtung und die Stützen mit dem Motor antreibbar sind. Alternativ kann es zweckmäßig sein, wenn der Deckel und die Stützen mit dem Motor antreibbar sind. Besonders bewährt hat es sich, wenn der Motor zumindest eine Hydraulikpumpe antreibt, welche den Deckel und/oder die Zugvorrichtung und/oder die Stützen antreibt. Dadurch ist eine aufwandsarme und verlässliche Ansteuerung und Energieversorgung ermöglicht. So kann beispielsweise vorgesehen sein, dass die Stellfüße und die Seilwinde, bevorzugt auch der Deckel, hydraulisch mit dem Motor über eine oder mehrere Hydraulikpumpen antreibbar sind.

Bevorzugt ist es, wenn der Laderaum bzw. den Laderaum bildende Teile des Fahrzeuganhängers, beispielsweise ein Laderaumboden bzw. eine Ladefläche oder Laderaumwände, und/oder der Deckel mit oder aus rostfreiem Stahl gebildet sind. Dadurch sind eine Beständigkeit und eine Korrosionsfestigkeit von Teilen, welche üblicherweise mit dem Tierkörper oder dessen Blut in Kontakt kommen, erhöht. Insbesondere kann dadurch eine Verunreinigung des Tierkörpers oder des aufgefangenen Blutes mit möglichen Korrosionsprodukten vermieden werden.

Vorteilhaft ist es, wenn der Fahrzeuganhänger einen Wassertank mit einer Wasserentnahmeeinrichtung aufweist, um Wasser mit der Wasserentnahmeeinrichtung aus dem Wassertank zu entnehmen. Dadurch können mögliche Verschmutzungen einfach und schnell vor Ort mit dem Wasser entfernt bzw. verschmutzten Flächen mit dem Wasser gereinigt werden. Die Wasserentnahmeeinrichtung kann beispielsweise als Ventil oder Wasserhahn ausgebildet sein. Günstig ist es, wenn die Wasserentnahmevorrichtung mit einer Wasserpumpe gebildet ist, um Wasser aus dem Wassertank zu pumpen.

Praktikabel ist es auch, wenn ein Waschbecken vorgesehen ist, um mit der Wasserentnahmevorrichtung aus dem Wassertank entnommenes Wasser mit dem Waschbecken aufzufangen. Indem der Fahrzeuganhänger einen Abwassertank aufweist, wobei das Waschbecken derart mit dem Abwassertank in Verbindung steht, dass mit dem Waschbecken aufgefangenes Wasser in den Abwassertank weiterleitbar ist, kann eine mögliche Verunreinigung der Umgebung mit insbesondere verunreinigtem Wasser vermieden werden.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 einen erfindungsgemäßen Fahrzeuganhänger mit geöffnetem Deckel aus Sicht von schräg hinten auf den Fahrzeuganhänger;
Fig. 2 den geöffneten Deckel des Fahrzeuganhängers der Fig. 1 mit ersichtlicher Zugvorrichtung;
Fig. 3 den Fahrzeuganhänger der Fig. 1 mit geöffnetem Deckel aus Sicht von schräg vorne;
Fig. 4 den Fahrzeuganhänger der Fig. 1 mit geschlossenem Deckel aus Sicht von schräg vorne.

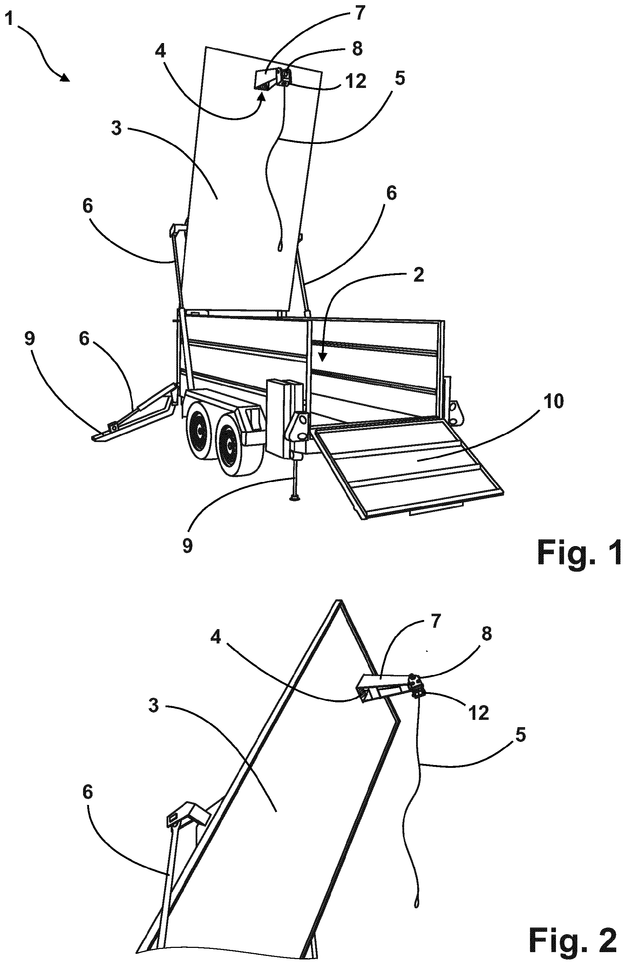

Fig. 1 zeigt eine schematische Darstellung eines erfindungsgemäßen Fahrzeuganhängers 1 zum Schlachten und Transportieren eines Tierkörpers, aufweisend einen Laderaum 2 zum Transportieren des Tierkörpers, einen Deckel 3 zum Verschließen des Laderaumes 2 sowie eine mit einer Seilwinde gebildete Zugvorrichtung zum hängenden Positionieren des Tierkörpers über dem Laderaum 2, indem der Tierkörper bei geöffnetem Deckel 3 mit der Seilwinde am Deckel 3 hochziehbar ist, um den Tierkörper in den Laderaum 2 zu entbluten und den Tierkörper nach dem Entbluten in den Laderaum 2 herabzulassen bzw. abzulegen. Die Seilwinde ist dabei mit einer Winde 4 und einem Seil 5 gebildet, welches auf die Winde 4 aufwickelbar ist. Der Laderaum 2 ist dabei mit einer Ladefläche und vertikal zur Ladefläche ausgerichteten an der Ladefläche angeordneten Wänden gebildet. Zweckmäßig ist dabei eine Rückwand 10 des Laderaumes 2 herunterklappbar ausgebildet, sodass die heruntergeklappte Rückwand 10 als Rampe in den Laderaum 2 dient. Dadurch ist ein Hochziehen eines beispielsweise hinter dem Fahrzeuganhänger 1 liegenden Tierkörpers am geöffneten Deckel 3 erleichtert, da dieses über die Rampe hochgezogen werden kann.

Der Deckel 3 ist hydraulisch durch Kippen von einer Öffnungsposition, in welcher der Tierkörper mit der Seilwinde am Deckel 3 hochziehbar ist und in den Laderaum 2 herabgelassen werden kann bzw. ablegbar ist, in eine Schließposition absenkbar, in welcher der Deckel 3 den Laderaum 2 des Fahrzeuganhängers 1 verschließt. Ein hydraulisches Absenken erfolgt dabei mit Hydraulikzylindern 6. Zweckmäßig sind zwei Hydraulikzylinder 6 an gegenüberliegenden Seiten des Fahrzeuganhängers 1 angeordnet, wodurch eine stabile Öffnungsposition und ein robustes Absenken des Deckels 3 ermöglicht ist.

Weiter in Fig. 1 ersichtlich ist, dass der Deckel 3 auf einer dem Laderaum 2 zugewandten Seite des Deckels 3 einen vertikal zur Längserstreckung des Deckels 3 ausgerichteten Ausleger 7 aufweist, um den Tierkörper bei geöffnetem Deckel 3 mit der Seilwinde am Ausleger 7 hochzuziehen. Die Winde 4 der Seilwinde ist im Inneren des Deckels 3 angeordnet, wobei das Seil 5 der Seilwinde durch eine Öffnung an einer dem Laderaum 2 zugewandten Seite des Deckels 3 herausgeführt und über ein am Ausleger 7 angeordnetes Führungselement, welches als Umlenkrolle 8 ausgebildet ist, geführt und zum Tierkörper weiterführbar ist. Der Ausleger 7 und die Seilwinde sind detailliert in Fig. 2 dargestellt.

Zur stabilen Positionierung des Fahrzeuganhängers 1 weist der Fahrzeuganhänger 1 mehreren Stützen 9 auf, um den Fahrzeuganhänger 1 gegen einen Untergrund abzustützen. Hierzu sind sowohl hydraulisch herunterklappbare als auch hydraulisch ausfahrbare Stützen 9 vorgesehen. Zweckmäßig sind hierbei entlang einer Längserstreckung des Fahrzeuganhängers 1 in einem Bereich einer Kippachse des Deckels 3, um welche der Deckel 3 kippbar ist, hydraulisch herunterklappbare Stützen 9 angeordnet, welche eine schräge Abstützung des Fahrzeuganhängers 1 gegen einen Untergrund bilden. Vorgesehen sind zwei solcher Stützen 9 an gegenüberliegenden Seiten des Fahrzeuganhängers 1, eine davon ersichtlich in der Fig. 1 in einem vorderen Bereich des Fahrzeuganhängers 1. Dargestellt ist hierbei außerdem ein Hydraulikzylinder 6, mit welchem die Stütze hydraulisch herunterklappbar ist. Weiter vorgesehen sind vertikal gegen einen Untergrund ausfahrbare Stützen 9, eine davon ersichtlich in der Fig. 1 in einem hinteren Bereich des Fahrzeuganhängers 1.

Fig. 2 zeigt den geöffneten Deckel 3 des Fahrzeuganhängers 1 der Fig. 1 mit ersichtlicher Zugvorrichtung bzw. Seilwinde. Dargestellt ist der Deckel 3 in Öffnungsposition mit dem vertikal zur Längserstreckung des Deckels 3 ausgerichteten Ausleger 7. Ersichtlich ist die im Inneren des Deckels 3 angeordnete Winde 4, um welche das Seil 5 gewickelt ist, wobei das Seil 5 über die am Ausleger 7 angeordnete Umlenkrolle 8 geführt und zum Tierkörper weiterführbar ist. Am Ausleger 7 ist zudem ein Begrenzungselement 12 angeordnet, um eine Auslenkung des Seiles 5 nach der Führung des Seiles 5 mit dem Führungselement bzw. der Umlenkrolle 8 zu begrenzen.

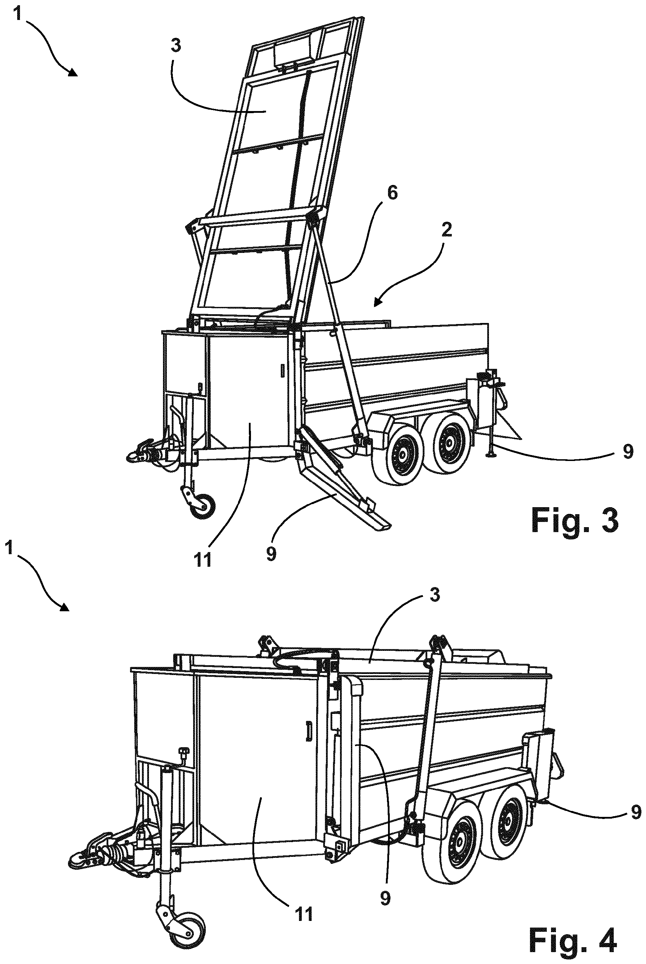

Fig. 3 zeigt den Fahrzeuganhänger 1 der Fig. 1 mit geöffnetem Deckel 3 aus Sicht von schräg vorne. Ersichtlich in Fig. 2 in einem vorderen Bereich des Fahrzeuganhängers 1 ist ein geschlossener Aufbewahrungsraum 11, in welchem sich ein Motor befindet. Vorgesehen ist, dass der Motor sowohl den Deckel 3, die Seilwinde als auch die Stützen 9 antreibt. Diese werden dabei mittelbar über eine oder mehrere Hydraulikpumpen angetrieben, welche der Motor betreibt.

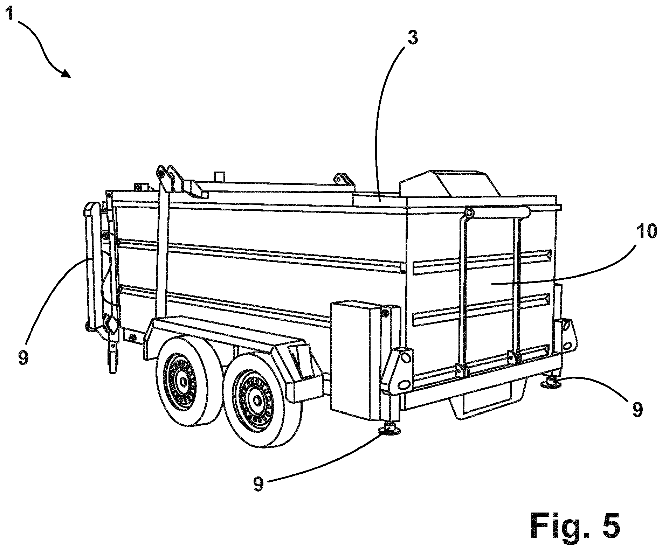

Fig. 4 zeigt den Fahrzeuganhänger 1 der Fig. 1 mit geschlossenem Deckel 3 aus Sicht von schräg vorne. Der Fahrzeuganhänger 1 ist in einem Transportzustand dargestellt, um einen im Laderaum 2 des Fahrzeuges abgelegten entbluteten Tierkörper hygienisch geschützt zu transportieren, beispielsweise zu einem Schlachthof bzw. Weiterverarbeitungsbetrieb. Im Unterschied zur Fig. 1 ist die Rückwand 10 hochgeklappt, ersichtlich dargestellt in Fig. 5, und die Stützen 9 sind hochgeklappt bzw. eingefahren. Weiter ist der Deckel 3 in die Schließposition heruntergeklappt, wobei der Deckel 3 den Laderaum 2 vollständig verschließt. Fig. 5 zeigt den Fahrzeuganhänger 1 der Fig. 4 aus Sicht von schräg hinten. Gut ersichtlich sind die hochgeklappte Rückwand 10 sowie die in einem hinteren Bereich des Fahrzeuges angeordneten ausfahrbaren Stützen 9 in einem eingefahrenen Zustand.

Ein erfindungsgemäßer Fahrzeuganhänger 1 ermöglicht ein hygienisches Schlachten und einen hygienischen Transport, insbesondere auch eines schweren Tierkörpers, wie eines Rindkörpers, auf praktikable und aufwandreduziert Weise. Indem der Tierkörper bei geöffnetem Deckel 3 mit der Zugvorrichtung am Deckel 3 derart hochziehbar ist, dass der Tierkörper über dem Laderaum 2 des Fahrzeuganhängers 1 hängend positionierbar ist, um den Tierkörper in den Laderaum 2 zu entbluten und anschließend in den Laderaum 2 abzusenken bzw. abzulegen, ist aufwandsarm eine mögliche Verunreinigung des Tierkörpers sowie eine Verunreinigung einer Umgebung mit einem Blut des Tierkörpers vermindert bzw. verhindert. Der Laderaum 2 ist mit dem Deckel 3 verschließbar, wodurch ein Transport des Tierkörpers im Laderaum 2 geschützt vor Umgebungseinflüssen und Verunreinigungen ermöglicht ist. Ein Entbluten und Abtransport des Tierkörpers kann insbesondere zeiteffizient durchgeführt werden, wodurch eine schnelle Weiterverarbeitung des Tierkörpers ermöglicht ist. Die Zugvorrichtung ist mit einer Seilwinde gebildet. Dies ermöglicht ein praktikables Hochziehen des Tierkörpers auf aufwandsarme Weise. Indem der Deckel 3 durch ein Kippen von der Öffnungsposition in die Schließposition absenkbar ist, ist eine besonders leichte Handhabung eines am Deckel 3 hochgezogenen Tierkörpers ermöglicht, da eine horizontale Position des Tierkörpers sowie eine Höhe des Tierkörpers über dem Laderaum 2 durch Kippen des Deckels 3 variierbar ist. Um eine stabile Position des Fahrzeuganhängers 1 sicherzustellen, ist der Fahrzeuganhänger 1 mit mehreren Stützen 9 ausgebildet, welche ein Abstütze des Fahrzeuganhängers 1 gegen einen Untergrund ermöglichen. Sowohl der Deckel 3, die Seilwinde als auch die Stützen 9 sind hydraulisch bewegbar. Vorgesehen ist zudem ein Motor, mit welchem der Deckel 3, die Seilwinde und die Stützen 9 antreibbar sind. Dadurch ist eine einfache und robuste Ausbildung und Bedienung des Fahrzeuganhängers 1 umgesetzt.

## Patentansprüche

1. Fahrzeuganhänger (1) zum hygienischen Schlachten und Transportieren eines Tierkörpers, insbesondere eines Rindes, aufweisend einen Laderaum (2) zum Transport des Tierkörpers, einen Deckel (3) zum Verschließen des Laderaumes (2) und eine Zugvorrichtung zum hängenden Positionieren des Tierkörpers, wobei der Deckel (3) von der Öffnungsposition durch Kippen des Deckels (3) in die Schließposition absenkbar ist, in welcher der Deckel (3) den Laderaum (2) des Fahrzeuganhängers (1) zumindest bereichsweise oder vollständig verschließt, **dadurch gekennzeichnet, dass** die Zugvorrichtung mit dem Deckel (3) in Verbindung steht und so angeordnet ist, dass der Tierkörper bei geöffnetem Deckel (3) mit der Zugvorrichtung am Deckel (3) derart hochziehbar ist, dass der Tierkörper über dem Laderaum (2) des Fahrzeuganhängers (1) hängend positionierbar ist, um den Tierkörper in den Laderaum (2) zu entbluten, wobei der Deckel (3) von der Öffnungsposition, in welcher der Tierkörper mit der Zugvorrichtung am Deckel (3) hochziehbar ist, sodass der Tierkörper in den Laderaum (2) entblutet und anschließend in den Laderaum (2) herabgelassen werden kann, hydraulisch oder elektrisch in die Schließposition absenkbar ist.

2. Fahrzeuganhänger (1) nach Anspruch 1, **dadurch gekennzeichnet, dass** der Deckel (3) auf einer dem Laderaum (2) zugewandten Seite des Deckels (3) einen quer zu einer Längserstreckung des Deckels (3) ausgerichteten Ausleger (7) aufweist, um den Tierkörper bei geöffnetem Deckel (3) mit der Zugvorrichtung am Ausleger (7) hochzuziehen.

3. Fahrzeuganhänger (1) nach einem der Ansprüche 1 oder 2, **dadurch gekennzeichnet, dass** der Laderaum (2) als oder mit einer Blutauffangwanne ausgebildet ist, um Blut bei einem Entbluten des Tierkörpers aufzunehmen.

4. Fahrzeuganhänger (1) nach einem der Ansprüche 1 bis 3, **dadurch gekennzeichnet, dass** der Fahrzeuganhänger (1) einen Blutsammelbehälter aufweist und der Laderaum (2) derart ausgebildet ist, dass mit dem Laderaum (2) aufgenommenes Blut in den Blutsammelbehälter leitbar ist.

5. Fahrzeuganhänger (1) nach einem der Ansprüche 1 bis 4, **dadurch gekennzeichnet, dass** der Laderaum (2) mit dem Deckel (3) flüssigkeitsdicht verschließbar ist.

6. Fahrzeuganhänger (1) nach einem der Ansprüche 1 bis 5, **dadurch gekennzeichnet, dass** am Deckel (3) bei geöffnetem Deckel (3) ein Tierkörper mit einem Gewicht bis etwa 1000 kg, bis etwa 1500 kg oder bis etwa 2000 kg hochziehbar ist.

7. Fahrzeuganhänger (1) nach einem der Ansprüche 1 bis 6, **dadurch gekennzeichnet, dass** ein Zugmittel der Zugvorrichtung, mit welchem der Tierkörper bei geöffnetem Deckel (3) mit der Zugvorrichtung am Deckel (3) hochziehbar ist, über zumindest ein am Deckel (3) angeordnetes Führungselement geführt und zum Tierkörper weiterführbar ist, um den Tierkörper geführt am Deckel (3) hochzuziehen.

8. Fahrzeuganhänger (1) nach einem der Ansprüche 1 bis 7, **dadurch gekennzeichnet, dass** die Zugvorrichtung hydraulisch antreibbar ist.

9. Fahrzeuganhänger (1) nach einem der Ansprüche 1 bis 8, **dadurch gekennzeichnet, dass** die Zugvorrichtung an einer dem Laderaum (2) zugewandten Seite des Deckels (3) angeordnet ist.

10. Fahrzeuganhänger (1) nach einem der Ansprüche 1 bis 9, **dadurch gekennzeichnet, dass** die Zugvorrichtung mit einer oder als Seilwinde gebildet ist, um den Tierkörper am Deckel (3) bei geöffnetem Deckel (3) mit einem Seil (5) der Seilwinde hochzuziehen.

11. Fahrzeuganhänger (1) nach Anspruch 10, **dadurch gekennzeichnet, dass** eine Winde (4) der Seilwinde, mit welcher das Seil (5) bewegbar bzw. hochziehbar ist, im Inneren des Deckels (3) oder zumindest teilweise im Inneren des Deckels (3) an einer dem Laderaum (2) zugewandten Seite des Deckels (3) angeordnet ist.

12. Fahrzeuganhänger (1) nach einem der Ansprüche 1 bis 11, **dadurch gekennzeichnet, dass** der Fahrzeuganhänger (1) eine oder mehrere Stützen (9) aufweist, um den Fahrzeuganhänger (1) gegen einen Untergrund abzustützen.

## Claims

1. A vehicle trailer (1) for the hygienic slaughtering and transporting of an animal carcass, in particular of a cow, comprising a load compartment (2) for transporting the animal carcass, a cover (3) for closing the load compartment (2) and a pulling device for the suspended positioning of the animal carcass, wherein the cover (3) is lowerable, by tilting the cover (3), from the open position into the closed position, in which the cover (3) closes the load compartment (2) of the vehicle trailer (1) at least in regions or completely, **characterized in that** the pulling device is in connection with the cover (3) and arranged so that the animal carcass, with opened cover (3), can be pulled up on the cover (3) with the pulling device in such a manner that the animal carcass can be positioned, suspended above the load compartment (2) of the vehicle trailer (1), in order to bleed the animal carcass into the load compartment (2), wherein the cover (3) is hydraulically or electrically lowerable from the open position, in which the animal carcass can be pulled up on the cover (3) with the pulling device so that the animal carcass bleeds into the load compartment (2) and can subsequently be lowered into the load compartment (2) .

2. The vehicle trailer (1) according to claim 1, **characterized in that** the cover (3), on a side of the cover (3) facing the load compartment (2), comprises an outrigger (7) oriented transversely to the longitudinal extension of the cover (3), in order to pull the animal carcass, with opened cover (3), up on the outrigger (7) with the pulling device.

3. The vehicle trailer (1) according to anyone of the claims 1 or 2, **characterized in that** the load compartment (2) is formed as or with a blood collection tub in order to receive blood upon a bleeding of the animal carcass.

4. The vehicle trailer (1) according to anyone of the claims 1 to 3, **characterized in that** the vehicle trailer (1) comprises a blood collection container and the load compartment is formed in such a manner that blood received with the load compartment (2) con be conducted into the blood collection container.

5. The vehicle trailer (1) according to anyone of the claims 1 to 4, **characterized in that** the load compartment (2) can be closed with the cover (3) so as to be liquid-tight.

6. The vehicle trailer (1) according to anyone of the claims 1 to 5, **characterized in that** on the cover (3) with opened cover (3) an animal carcass having a weight of up to 1000 kg, of up to approximately 1500 kg or of up to approximately 2000 kg can be pulled up on the cover.

7. The vehicle trailer (1) according to anyone of the claims 1 to 6, **characterized in that** a pulling means of the pulling device, with which the animal carcass with opened cover (3) can be pulled up on the cover (3), is guided via at least one guiding element arranged on the cover (3) and can be guided on to the animal carcass in order to pull the animal carcass up on the cover (3) in a guided manner.

8. The vehicle trailer (1) according to anyone of the claims 1 to 7, **characterized in that** the pulling device is hydraulically drivable.

9. The vehicle trailer (1) according to anyone of the claims 1 to 8, **characterized in that** the pulling device is arranged on a side of the cover (3) facing the load compartment (2).

10. The vehicle trailer (1) according to anyone of the claims 1 to 9, **characterized in that** the pulling device is formed with or as a cable winch in order to pull the animal carcass, with opened cover (3), up on the cover (3) with a cable (5) of the cable winch.

11. The vehicle trailer (1) according to claim 10, **characterized in that** a winch (4) of the cable winch, with which the cable (5) can be moved or pulled up is arranged in the interior of the cover (3) or at least partially in the interior of the cover (3) on a side of the cover (3) facing the load compartment (2).

12. The vehicle trailer (1) according to anyone of the claims 1 to 11, **characterized in that** the vehicle trailer (1) comprises one or multiple supports (9) in order to support the vehicle trailer (1) against a ground.

## Revendications

1. Remorque de véhicule (1), pour l'abattage hygiénique et le transport d'un corps animal, en particulier d'un bovin, comportant un espace de chargement (2) pour le transport du corps animal, un capot de couverture (3) pour fermer l'espace de chargement (2) et un dispositif de traction pour positionner en suspension le corps animal, sachant que le capot de couverture (3) peut être descendu de la position d'ouverture par basculement du capot de couverture (3) dans la position de fermeture dans laquelle le capot de couverture (3) ferme en moins en partie ou complètement l'espace de chargement (2) de la remorque de véhicule (1), **caractérisée en ce que** le dispositif de traction est en liaison avec le capot de couverture (3) et est disposé de telle manière que le corps animal peut être remonté sur le capot de couverture (3) avec le dispositif de traction le capot de couverture (3) étant ouvert de telle sorte que le corps animal peut être positionné en suspension au-dessus de l'espace de chargement (2) de la remorque de véhicule (1) pour saigner l'animal dans l'espace de chargement (2), sachant que le capot de couverture (3) peut être abaissé hydrauliquement ou électriquement dans la position de fermeture depuis la position d'ouverture dans laquelle le corps animal peut être remontée sur le capot de couverture (3) avec le dispositif de traction de telle sorte que l'animal peut être saigné dans l'espace de chargement (2) et être ensuite descendu dans l'espace de chargement (2).

2. Remorque de véhicule (1), selon la revendication 1, **caractérisée en ce que** le capot de couverture (3) comporte sur un côté du capot de couverture (3) tourné vers l'espace de chargement (2) une console (7) orientée transversalement à une extension longitudinale du capot de couverture (3) pour remonter le corps animal avec le dispositif de traction sur la console (7) avec le capot de couverture (3) ouvert.

3. Remorque de véhicule (1), selon l'une quelconque des revendications 1 ou 2, **caractérisée en ce que** l'espace de chargement (2) est constitué en tant que bac de récupération du sang ou avec un bac de récupération du sang pour recueillir le sang lors d'une saignée de l'animal.

4. Remorque de véhicule (1), selon l'une quelconque des revendications 1 à 3, **caractérisée** ce que la remorque de véhicule (1) comporte un bac de collecte de sang et l'espace de chargement (2) est constitué de telle sorte que le sang réceptionné avec l'espace de chargement peut être dirigé dans le bac de collecte de sang.

5. Remorque de véhicule (1), selon l'une quelconque des revendications 1 à 4, **caractérisée en ce que** l'espace de chargement (2) peut être fermé de façon étanche au liquide avec le capot de couverture (3).

6. Remorque de véhicule (1), selon l'une quelconque des revendications 1 à 5, **caractérisée en ce qu'**un corps animal d'un poids d'environ 1000 kg jusqu'à environ 1500 kg ou jusqu'à environ 2000 kg peut être remonté sur le capot de couverture (3) lorsque le capot de couverture (3) est ouvert.

7. Remorque de véhicule (1), selon l'une quelconque des revendications 1 à 6, **caractérisée en ce qu'**un moyen de traction du dispositif de traction, avec lequel le corps animal peut être remonté sur le capot de couverture (3) avec le dispositif de traction lorsque le capot est ouvert (3), est guidé par au moins un élément de guidage disposé sur le capot de couverture (3) et peut être transféré au corps animal pour remonter le corps animal guidé sur le capot de couverture (3).

8. Remorque de véhicule (1), selon l'une quelconque des revendications 1 à 7, **caractérisée en ce que** le dispositif de traction peut être entraîné de façon hydraulique.

9. Remorque de véhicule (1), selon l'une quelconque des revendications 1 à 8, **caractérisée en ce que** le dispositif de traction est disposé sur un côté du capot de couverture (3) tourné vers l'espace de chargement (2) .

10. Remorque de véhicule (1), selon l'une quelconque des revendications 1 à 9, **caractérisée en ce que** le dispositif de traction est formé par un ou sous la forme d'un treuil à câble pour remonter le corps animal sur le capot de couverture (3) avec un câble (5) du treuil à câble lorsque le capot de couverture est ouvert (3).

11. Remorque de véhicule (1) selon la revendication 10, **caractérisée en ce qu'**un treuil (4) du treuil à câble avec lequel le câble (5) peut être déplacé ou remonté, est disposé à l'intérieur du capot de couverture (3) ou au moins en partie à l'intérieur du capot de couverture (3) sur un côté du capot de couverture (3) tourné vers l'espace de chargement (2).

12. Remorque de véhicule (1) selon l'une quelconque des revendications 1 à 11, **caractérisée en ce que** la remorque de véhicule (1) comporte un ou plusieurs supports (9), pour appuyer la remorque de véhicule (1) contre une sous-structure.
